# EUROPÄISCHE PATENTSCHRIFT

(11) **EP 4 028 819 B1**
(45) Veröffentlichungstag und Bekanntmachung des Hinweises auf die Patenterteilung: **11.10.2023**
(21) Anmeldenummer: 20758132.3
(22) Anmeldetag: 11.08.2020
(51) Int. Cl.: G02B 27/01, G06F 3/01

(54) **VERFAHREN ZUM BETREIBEN EINES AM KOPF TRAGBAREN ANZEIGEGERÄTS IN EINEM KRAFTFAHRZEUG, STEUEREINRICHTUNG, UND AM KOPF TRAGBARES ANZEIGEGERÄT**
METHOD FOR OPERATING A HEAD-MOUNTED DISPLAY APPARATUS IN A MOTOR VEHICLE, CONTROL DEVICE, AND HEAD-MOUNTED DISPLAY APPARATUS
PROCÉDÉ DE FONCTIONNEMENT D'UN APPAREIL D'AFFICHAGE MONTÉ SUR LA TÊTE DANS UN VÉHICULE À MOTEUR, DISPOSITIF DE COMMANDE ET APPAREIL D'AFFICHAGE MONTÉ SUR LA TÊTE

(30) Priorität: 10.09.2019 DE 102019213740
(43) Veröffentlichungstag der Anmeldung: 20.07.2022
(73) Patentinhaber: Audi AG, 85045 Ingolstadt (DE)
(72) Erfinder: KÜHNE, Marcus, 92339 Beilngries (DE)
(74) Vertreter: Hofstetter, Schurack & Partner
(86) Internationale Anmeldenummer: PCT/EP2020/072503
(87) Internationale Veröffentlichungsnummer: WO 2021/047845

(56) Entgegenhaltungen:
- DE-A1-102014 001 274
- DE-A1-102014 010 309
- DE-A1-102014 018 054
- DE-A1-102015 003 882

## Beschreibung

Die Erfindung betrifft ein Verfahren zum Betreiben eines am Kopf tragbaren Anzeigegeräts in einem Kraftfahrzeug.

Am Kopf zu tragende Ausgabegeräte haben mit der fortschreitenden Entwicklung von autonom fahrenden Kraftfahrzeugen eine immer größere Bedeutung beim Entertainment während einer Fahrt, ebenso bei der derzeit zunehmenden Entwicklung von Fahrdiensten. So steht insbesondere bei zum Beispiel Ride-Hailing-Fahrzeugen die Nutzung eines immersiven Onboard-Entertainments vor der Herausforderung, dass der Benutzer beim Tragen zum Beispiel einer VR-Brille die Situation im Fahrzeug nicht mehr überblicken kann. Was bei normalem Passenger-Entertainment kein Problem ist, kann zum Beispiel in einem Ride-Hailing-Fahrzeug sehr wohl zum Problem werden, wo der Benutzer möglicherweise einen klareren Überblick über die Situation haben möchte, um sich wohler und sicherer zu fühlen.

So hat der Benutzer zum Beispiel während des Eintauchens in eine virtuelle Realität ("VR") in einem solchen Fahrzeug zum Beispiel nicht die Übersicht, was der Fahrer oder was andere Passagiere, die in der Regel fremde Personen sind, machen. Möchte zum Beispiel der fremde Fahrer mit dem Passagier reden, und wird man vom Fahrer angeschaut, so kann man das nicht sehen. Falls man von dem Fahrer angesprochen wird, kann man dies nur wahrnehmen, falls das Anzeigegerät die Ohren frei lässt und das Anzeigegerät keine Kopfhörer für ein Sound-Erlebnis eines Unterhaltungsprogramms hat. Kann man zum Beispiel den fremden Fahrer auch akustisch nicht wahrnehmen, bleibt dem Fahrer nur die Möglichkeit, den Benutzer des Anzeigegeräts zum Beispiel auf die Schulter zu tippen oder am Arm anzufassen, was für den Benutzer des Anzeigegeräts nicht nur sehr unangenehm sein kann, sondern der Benutzer des Anzeigegeräts kann sich dabei sehr erschrecken.

Die DE 10 2014 010 309 A1 beschreibt eine Vorrichtung aufweisend eine vom Benutzer am Kopf zu tragende Anzeigeeinheit, die dazu ausgebildet ist, Augen des Benutzers zu einer Umgebung hin lichtdicht abzuschirmen und vor den Augen ein in einen virtuellen Raum angeordnetes virtuelles Objekt stereoskopisch anzuzeigen.

Aus der DE 10 2009 049 073 A1 ist ein Verfahren zur Darstellung von virtueller Information in einer Ansicht einer realen Umgebung umfasst.

Die DE 10 2014 213 285 A1 beschreibt ein Verfahren zur Anzeige von Inhalten auf einer Datenbrille.

Die DE 10 2015 003 882 A1 beschreibt ein Verfahren zum Betreiben einer in einem Kraftfahrzeug angeordneten Virtual-Reality-Brille.

Eine Möglichkeit zum Umgehen der oben angesprochenen Problematik ist das Weglassen von Kopfhörern, wodurch jedoch der Benutzer keinen Ton zum virtuellen oder teilweise virtuellen Unterhaltungsprogramm hat, weswegen zum Beispiel eine virtuelle Realität oder eine erweiterte Realität wenig immersiv sind.

Eine der Erfindung zugrundeliegende Aufgabe ist das Erhöhen eines Sicherheitsgefühls und eines Wohlbefindens im Kraftfahrzeug beim Nutzen eines Unterhaltungsangebots.

Die gestellte Aufgabe wird durch das erfindungsgemäße Verfahren und die erfindungsgemäßen Vorrichtungen gelöst. Vorteilhafte Weiterbildungen sind durch die Unteransprüche gegeben.

Die Erfindung basiert auf der Idee, bei der Nutzung eines am Kopf tragbaren Anzeigegeräts im Kraftfahrzeug zusätzlich zu dem eigentlichen Ausgabeinhalt eines Unterhaltungsangebots, also neben dem Ausgeben des Hauptcontents ein durch einen oder mehrere Sensoren erfasstes Bild (und/oder eine erfasste Bildserie) des Innenraums des Kraftfahrzeugs einzublenden. Insbesondere handelt es sich bei dem Bild oder bei der Bilderserie um ein aktuelles Bild oder eine aktuelle Bilderserie. Die oben besprochenen Nachteile werden deutlich reduziert oder sogar behoben. Ein Benutzer eines am Kopf tragbaren Anzeigegeräts fühlt sich sicher, weil der trotz dem Eintauchen in zum Beispiel die virtuelle Realität den Überblick über den Innenraum des Kraftfahrzeugs hat. Unangenehmen Situationen, in denen er zum Beispiel von einer fremden Person ohne Vorwarnung angefasst wird, kann wirksam vorgebeugt werden.

Das erfindungsgemäße Verfahren zum Betreiben eines am Kopf tragbaren Anzeigegeräts, zum Beispiel einer Augmented-Reality-Brille, einer Mixed-Reality-Brille oder einer Virtual-Reality-Brille, während sich das am Kopf tragbare Anzeigegerät in einem Innenraum eines Kraftfahrzeugs befindet, ist entsprechend ein Verfahren zum Betreiben des am Kopf tragbaren Anzeigegeräts in dem Innenraum des Kraftfahrzeugs. Das Anzeigegerät ist dazu eingerichtet, einen ein Unterhaltungsangebot beschreibenden vorgegebenen Ausgabeinhalt auszugeben, zum Beispiel ein Computerspiel oder einen Film. Der Ausgabeinhalt kann zum Beispiel vorgegeben werden, indem der Benutzer den Ausgabeinhalt und damit das Unterhaltungsangebot auswählt, oder indem der Ausgabeinhalt durch eine Standardeinstellung vorgegeben ist.

Das Verfahren wird durch eine Steuereinrichtung durchgeführt, wobei unter einer Steuereinrichtung ein Gerät oder eine Gerätekomponente zum Empfangen und Auswerten von Signalen, sowie zum Erzeugen von Steuersignalen zu verstehen ist. Das Verfahren kann entsprechend als computerimplementiertes Verfahren zum Betreiben des am Kopf tragbaren Anzeigegeräts bezeichnet werden. Die Steuereinrichtung kann zum Beispiel als Steuerchip oder Steuergerät ausgestaltet sein. Die Steuereinrichtung kann vorzugsweise eine Steuereinrichtung des Kraftfahrzeugs oder des am Kopf tragbaren Anzeigegeräts sein.

Die Steuereinrichtung empfängt ein Sensorsignal aus einer Sensoreinrichtung, wobei das empfangene Sensorsignal mindestens ein Bild der aktuellen Innenraumsituation des Kraftfahrzeugs beschreibt. Unter einer Sensoreinrichtung wird ein Gerät oder eine Gerätegruppe zum Erfassen von Eigenschaften der Umwelt verstanden, insbesondere zum Erfassen einer Eigenschaft des Innenraums, weswegen die Sensoreinrichtung vorzugsweise zum Beispiel mindestens eine Innenraumkamera des Kraftfahrzeugs umfassen kann, und/oder zum Beispiel mindestens einen Infrarotsensor. Das mindestens eine Bild kann zum Beispiel ein Foto sein, ein Wärmebild, oder eine Bilderserie, zum Beispiel ein Film des Geschehens im Innenraum.

Die Steuereinrichtung erzeugt ein Einblendsignal, das ein Einblenden des mindestens einen Bilds der aktuellen Innenraumsituation während des Ausgebens des vorgegebenen Ausgabeinhalts beschreibt, und überträgt das erzeugte Einblendsignal an ein Anzeigeelement des Anzeigegeräts und veranlasst dadurch das Anzeigegerät, das mindestens eine Bild der aktuellen Innenraumsituation während des Ausgebens des vorgegebenen Ausgabeinhalts einzublenden. Ein Anzeigeelement ist ein Bauteil oder Bauteilgruppe oder Gerätekomponente zum Anzeigen von Bildinhalten, zum Beispiel ein Bildschirm. Mit anderen Worten veranlasst die Steuereinrichtung das Anzeigegerät dazu, zusätzlich zu dem Ausgabeinhalt, zum Beispiel zusätzlich zu einer virtuellen Realität, das mindestens eine Bild des Innenraums des Kraftfahrzeugs auszugeben, wobei das mindestens eine Bild des Innenraums vorzugsweise gleichzeitig mit dem Ausgabeinhalt ausgegeben wird, also das mindestens eine Bild des Innenraums nur in einem Teilbereich des Gesichtsfelds eines Benutzers des Anzeigegeräts eingeblendet wird.

Erfindungsgemäß kann die Steuereinrichtung das Einblendsignal nur dann erzeugen oder nur dann übertragen, falls die Steuereinrichtung ein Sprechen eines Insassen feststellt und/oder falls die Steuereinrichtung ein Annähern des Kraftfahrzeugs an ein Fahrtziel des Kraftfahrzeugs feststellt, zum Beispiel ein Unterschreiten eines vorgegebenen Schwellenwerts einer Distanz zu dem Fahrtziel oder ein Erreichen von vorgegebenen geographischen Koordinaten. Der Benutzer wird also nur dann aus seiner virtuellen Realität "geholt", falls eine Wahrscheinlichkeit besteht, dass der Fahrer bald mit ihm zum Beispiel wegen einer Bezahlung für die Fahrt sprechen möchte oder dass der Benutzer wahrscheinlich jetzt seine Sachen zusammenpacken muss, weil er bald am Fahrtziel angekommen ist.

Es ergeben sich die oben beschriebenen Vorteile.

Optional kann die Steuereinrichtung zusätzlich den vorgegebenen Ausgabeinhalt bereitstellen. Dies kann vorzugsweise dann gewünscht sein, falls die Steuereinrichtung eine Steuereinrichtung des Kraftfahrzeugs ist und der Ausgabeinhalt zum Beispiel als eine Art Entertainmentservice von dem Kraftfahrzeug zur Verfügung gestellt wird. Jedoch kann die Steuereinrichtung den vorgegebenen Ausgabeinhalt optional auch dann bereitstellen, falls die Steuereinrichtung eine Steuereinrichtung des Anzeigegeräts ist.

Eine Ausführungsform des erfindungsgemäßen Verfahrens kann vorsehen, dass das erzeugte Einblendsignal das Einblenden des mindestens einen Bilds der aktuellen Innenraumsituation in nur einem Teilbereich eines Gesichtsfelds des Benutzers des Anzeigegeräts beschreibt, vorzugsweise in einem primären oder zentralen Gesichtsfeld. Der Benutzer kann dadurch die Innenraumsituation sofort erfassen.

Optional kann das empfangene Sensorsignal mindestens ein Kamerabild einer Innenraumkamera der Sensoreinrichtung beschreiben. Der Benutzer kann auf diesem eingeblendeten Bild auch zum Beispiel Mikrogesten und Mimiken anderer Insassen erkennen.

Vorzugsweise kann die Steuereinrichtung das Sensorsignal aus einer Sensoreinrichtung des Kraftfahrzeugs empfangen. Dadurch kann der Innenraum aus verschiedenen Perspektiven aufgenommen werden und das Verfahren ist auch mit solchen am Kopf tragbaren Anzeigegeräten kompatibel, die keine entsprechende Sensorik aufweisen.

Der vorgegebene Ausgabeinhalt kann zum Beispiel eine virtuelle Realität beschreiben, insbesondere eine 360 Grad virtuelle Realität. Dies sorgt dafür, dass der Benutzer des Anzeigegeräts ein besonders immersives Erlebnis während der Fahrt hat.

Gemäß einer bevorzugten Ausführungsform des erfindungsgemäßen Verfahrens kann die Steuereinrichtung das Einblendsignal nur dann erzeugen oder nur dann übertragen, falls die Steuereinrichtung ein Sprechen eines von dem Benutzer des Anzeigegeräts unterschiedlichen Insassen feststellt. Hierzu können zum Beispiel im Kraftfahrzeug Richtmikrofone eingebaut und mit der Steuereinrichtung gekoppelt sein.

Vorzugsweise kann das Erzeugen oder Übertragen des Einblendsignals zusätzlich in Abhängigkeit von einer Lautstärke des festgestellten Sprechens erfolgen. Der Benutzer bekommt also genau dann den Überblick über den Innenraum, wenn eine hohe Wahrscheinlichkeit besteht, dass die andere Person dem Benutzer des Anzeigegeräts etwas sagen möchte. Der Benutzer hat jedoch möglicherweise weiterhin den Sound des Ausgabeinhalts im Ohr, kann dann anhand des eingeblendeten Bildes jedoch erkennen, dass er selbst gerade angesprochen wird und kann entscheiden, ob er die Brille kurz absetzen möchte. Da das, was der andere Insasse gerade sagt, bei dieser Ausführungsform des Verfahrens unter Umständen nicht zum Benutzer des Anzeigegeräts durchdringt, wird ein Audioerlebnis nicht gestört.

In einer Variante kann die Steuereinrichtung das Einblendsignal nur dann erzeugen, oder nur dann an das Anzeigeelement des Anzeigegeräts übertragen, falls die Steuereinrichtung ein Aktivierungssignal aus einem Kraftfahrzeug empfängt, zum Beispiel ein Signal, das ein erfolgtes Einschalten der Warnblinkanlage beschreibt. Alternativ kann ein Ausblenden des mindestens einen Bilds der Innenraumsituation erfolgen, falls die Steuereinrichtung ein Deaktivierungssignal aus dem Kraftfahrzeug empfängt.

Vorzugsweise kann die Steuereinrichtung zusätzlich ein Sensorsignal aus der Sensoreinrichtung empfangen, das mindestens ein Bild einer Außenumgebung des Kraftfahrzeugs beschreibt, das vorzugsweise aus einer Außenkamera empfangen werden kann. Entweder kann dann das von der Steuereinrichtung erzeugte Einblendsignal das zusätzlich mindestens eine Bild der Außenumgebung beschreiben, oder die Steuereinrichtung kann ein weiteres Einblendsignal erzeugen, welches das mindestens eine Bild der Außenumgebung beschreibt. Das Bild der Außenumgebung kann dann zum Beispiel an einer anderen Stelle eingeblendet werden als das Bild des Innenraums. Der Benutzer des Anzeigegeräts hat so zusätzlich auch noch einen Überblick über die Umgebung des Kraftfahrzeugs. Die Sensoreinrichtung kann hierfür zum Beispiel eine an einer Außenhaut oder auf einem Dach des Kraftfahrzeugs angeordnete Kamera aufweisen.

Gemäß einer weiteren Ausführungsform kann die Steuereinrichtung ein Kartenbildsignal erzeugen, das ein Bild einer Navigationskarte mit zum Beispiel der aktuellen Position des Kraftfahrzeugs beschreiben kann. Dieses Bild kann zusätzlich zu dem Bild der Innenraumsituation durch das Anzeigegerät angezeigt werden, wozu die Steuereinrichtung das erzeugte Karteneinblendsignal an das Anzeigeelement des Anzeigegeräts übertragen kann.

Alternativ kann das Kartenbildsignal zum Beispiel nur in einem vorgegebenen Zeitraum ausgegeben werden, zum Beispiel nur am Anfang und/oder nur am Ende der Fahrt, oder nur in einem vorgegeben Zeitraum nach Fahrtbeginn und vor dem Fahrtende. Das Innenraumbild kann dann nur dann angezeigt werden, falls das Bild der Navigationskarte ausgeblendet ist.

Die oben gestellte Aufgabe wird gelöst durch eine Steuereinrichtung, die dazu eingerichtet ist, eine oder mehrere Ausführungsformen des erfindungsgemäßen Verfahrens durchzuführen. Die Steuereinrichtung kann vorzugsweise eine Prozessoreinrichtung aufweisen und/oder einen Datenspeicher. Unter einer Prozessoreinrichtung wird dabei eine Gerätekomponente zur elektronischen Datenverarbeitung verstanden, die mindestens einen Mikrocontroller und/oder einen Mikroprozessor aufweist. Auf dem optionalen Datenspeicher kann vorzugsweise ein Programmcode zum Durchführen des erfindungsgemäßen Verfahrens abgelegt sein. Der Programmcode kann dann dazu ausgelegt sein, bei Ausführung durch die Prozessoreinrichtung die Steuereinrichtung dazu zu veranlassen, eine der oben beschriebenen Ausführungsformen des erfindungsgemäßen Verfahrens durchzuführen. Die Steuereinrichtung kann vorzugsweise als Steuerchip, Steuergerät oder Anwenderprogramm ("App") ausgestaltet sein.

Die oben gestellte Aufgabe wird gelöst durch ein Kraftfahrzeug, das eine Ausführungsform der erfindungsgemäßen Steuereinrichtung aufweist. Das Kraftfahrzeug kann bevorzugt als Kraftwagen, insbesondere als Personenkraftwagen oder Lastkraftwagen, oder als Personenbus oder Motorrad ausgestaltet sein.

Die oben gestellte Aufgabe wird gelöst durch ein am Kopf tragbares Anzeigegerät, das eine Ausführungsform der erfindungsgemäßen Steuereinrichtung aufweist. Das am Kopf tragbare Anzeigegerät, ein sogenanntes "Head-Mounted-Display", ist ein auf dem Kopf zu tragendes visuelles Ausgabegerät. Es ist dazu ausgestaltet und eingerichtet, Bilder entweder auf einem augennahen Bildschirm zu präsentieren, oder die Bilder direkt auf die Netzhaut zu projizieren. Das am Kopf zu tragende Anzeigegerät kann vorzugsweise als Virtual-Reality-Brille, Augmented-Reality-Brille oder Mixed-Reality-Brille ausgestaltet sein.

Zu der Erfindung gehören auch Weiterbildungen der erfindungsgemäßen Steuereinrichtung, des erfindungsgemäßen Kraftfahrzeugs und des erfindungsgemäßen Anzeigegeräts, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Steuereinrichtung, des erfindungsgemäßen Kraftfahrzeugs und des erfindungsgemäßen Anzeigegeräts hier nicht noch einmal beschrieben.

Die Erfindung umfasst auch die Kombinationen der Merkmale der beschriebenen Ausführungsformen.

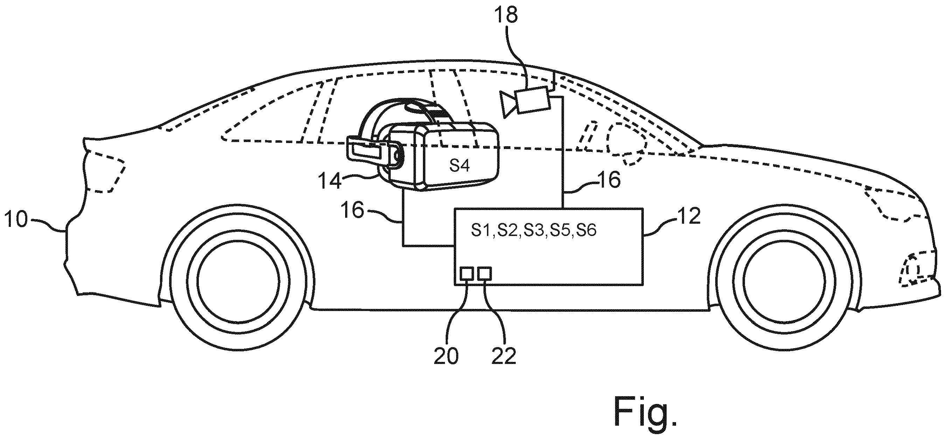

Im Folgenden sind Ausführungsbeispiele der Erfindung beschrieben. Hierzu zeigt die einzige Figur ("Fig.") eine schematische Darstellung zu einem ersten Ausführungsbeispiel des erfindungsgemäßen Verfahrens und der erfindungsgemäßen Vorrichtungen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

Die Fig. veranschaulicht das Prinzip des erfindungsgemäßen Verfahrens und der erfindungsgemäßen Vorrichtungen anhand eines ersten Ausführungsbeispiels. Hierzu zeigt die Fig. ein Kraftfahrzeug 10, zum Beispiel einen Personenkraftwagen eines Ride-Hailing-Fahrdienstes. Im Beispiel der Fig. kann die Steuereinrichtung 12 zum Beispiel ein Steuergerät oder ein Steuerchip des Kraftfahrzeugs 10 sein, alternativ jedoch in dem am Kopf tragbaren Anzeigegerät 14 verbaut sein. Das am Kopf tragbare Anzeigegerät 14 kann als Anzeigeelement (in der Fig. nicht gezeigt) zum Beispiel einen Bildschirm aufweisen.

Die Kommunikation mit dem Anzeigegerät 14 erfolgt über eine Datenkommunikationsverbindung 16. Ist zum Beispiel die Steuereinrichtung 12 im Anzeigegerät 14 verbaut, kann die Datenkommunikationsverbindung 16 eine drahtgebundene Datenkommunikationsverbindung sein, zum Beispiel ein Kabel oder ein Datenbus. Ist die Steuereinrichtung 12 eine Gerätekomponente des Kraftfahrzeugs 10, so kann die Datenkommunikationsverbindung 16 zur Kommunikation zwischen Steuereinrichtung 12 und Anzeigegerät 14 ebenfalls eine drahtgebundene Datenkommunikationsverbindung 16 sein, zum Beispiel ein Kabel, vorzugsweise jedoch eine drahtlose Datenkommunikationsverbindung 16, zum Beispiel eine WLAN-, Mobilfunk-, Internet- oder Bluetooth-Verbindung. Die Steuereinrichtung 12 der Fig. zeigt dabei eine optionale Prozessoreinrichtung 20, sowie einen optionalen Datenspeicher 22.

Ist die Steuereinrichtung 12 eine Komponente des Kraftfahrzeugs 10, so kann die Datenkommunikationsverbindung 16 mit der Sensoreinrichtung 18, die in der Fig. als Innenraumkamera dargestellt ist, über zum Beispiel einen Datenbus des Kraftfahrzeugs 10 erfolgen, zum Beispiel über ein CAN-Bus.

Im Beispiel der Fig. kann ein Benutzer des beispielhaften Ride-Hailing-Fahrdienstes das Kraftfahrzeug 10 zum Beispiel für eine Fahrt von zehn Kilometern oder eine Fahrt von einer halben Stunde Fahrtdauer gebucht haben. Das Entertainment mittels des am Kopf tragbaren Anzeigegeräts 14 kann zum Beispiel ein zusätzlicher Service dieses Fahrdienstes sein. Der Benutzer kann entweder sein eigenes Anzeigegerät 14 mitgebracht haben, oder das Anzeigegerät 14 kann von dem Fahrdienst bereitgestellt werden. Für die Fahrt kann zum Beispiel ein Unterhaltungsangebot bereitgestellt werden, das eine Reise in eine virtuelle Realität während der Fahrt beschreiben kann, insbesondere eine 360 Grad-virtuelle Realität. Der Ausgabeinhalt kann zum Beispiel eine Jurassic Park-virtuelle Realität sein, also ein Entertainment, das eine virtuelle Reise durch eine urzeitliche Landschaft beschreibt.

Das Ausgeben des vorgegebenen Ausgabeinhalts kann zum Beispiel mit Beginn der Fahrt beginnen. Im Verfahrensschritt S1 empfängt die Steuereinrichtung 12 mindestens ein Sensorsignal, das idealerweise von mehreren Innenraumkameras des Kraftfahrzeugs 10 den Innenraum beschreibt. In der Fig. ist zwar exemplarisch nur eine Kamera der Sensoreinrichtung 18 gezeigt, idealerweise können jedoch mehrere Kameras so angeordnet sein, dass der Innenraum aus verschiedenen Perspektiven zum Beispiel gefilmt wird. Die Bilder oder Bildserien der einzelnen Kameras können dann entweder in einem Sensorsignal beschrieben sein, oder in mehreren Sensorsignalen.

Das im Verfahrensschritt S2 erzeugte Einblendsignal kann also ein Kamerabild oder die Kamerabilder der mehreren Innenraumkameras beschreiben. Nach dem Übertragen des erzeugten Einblendsignals (S3) an das Anzeigeelement des Anzeigegeräts 14 wird dieses dazu veranlasst, vorzugsweise in einem peripheren Gesichtsfeld des Benutzers das entsprechende Bild oder die entsprechenden Bilder einzublenden (S4). Ist die Steuereinrichtung 12 eine Steuereinrichtung 12 des Kraftfahrzeugs 10, so wird das erzeugte Einblendsignal damit auch erst an das Anzeigegerät 14 übertragen (S3).

Der Benutzer kann wegen des eingeblendeten Bildes (oder der eingeblendeten Bilder oder Bilderserie) zum Beispiel andere, fremde Passagiere sehen, sowie den ihm fremden Fahrer. Falls zum Beispiel der Fahrer ihn wegen etwas ansprechen möchte, zum Beispiel eine Frage hat, sieht der Benutzer des Anzeigegeräts 14, dass sich der Fahrer ihm zuwendet. Selbst wenn der Benutzer des Anzeigegeräts 14 durch das Anzeigegerät 14 zusätzlich einen Audioinhalt der virtuellen Realität über zum Beispiel Kopfhörer empfängt, kann er erkennen, dass der Fahrer mit ihm sprechen möchte. Falls der Fahrer also zunächst keine Antwort von dem Benutzer bekommt und sich dazu entscheidet, den Benutzer des Anzeigegeräts 14 an der Schulter zu rütteln, kommt dies durch den Benutzer nicht unvorbereitet und der Benutzer des Anzeigegeräts 14 erschrickt nicht. Außerdem kann der Benutzer des Anzeigegeräts 14 sowieso sehr viel früher reagieren und dem Rütteln an der Schulter vorbeugen, in dem er zum Beispiel das Anzeigegerät 14 abnimmt, um mit dem Fahrer zu sprechen.

Um die Aufmerksamkeit des Benutzers des Anzeigegeräts 14 nicht ständig sondern nur situationsspezifisch auf das eingeblendete Bild zu lenken, kann die Steuereinrichtung 12 das Einblendsignal nur dann erzeugen (S2) oder nur dann übertragen (S3), falls die Steuereinrichtung 12 zum Beispiel mittels eines Mikrofons (in der Fig. nicht gezeigt) feststellt (S5), dass zum Beispiel der Fahrer gerade angefangen hat zu sprechen. Optional kann hier zusätzlich ein Schwellenwert für eine Lautstärke hinterlegt sein, sodass das Bild zum Beispiel noch nicht eingeblendet wird, falls der Fahrer nur leise vor sich hin murmelt.

Alternativ oder zusätzlich kann das Erzeugen des Einblendsignals (S2) oder das Übertragen des erzeugten Einblendsignals (S3) nur dann erfolgen, falls die Steuereinrichtung 12 zum Beispiel anhand von durch ein Navigationsgerät des Kraftfahrzeugs 10 festgestellten Navigationsdaten und GPS-Daten feststellt (S6), dass sich das Kraftfahrzeug 10 zum Beispiel nur noch einen Kilometer vom Fahrtziel entfernt bewegt. Falls nur dann das Innenraumsignal eingeblendet wird, weiß der Benutzer des Anzeigegeräts 14, dass er bald da ist und kann deswegen besser zuordnen, dass eine von ihm gefühlte Unruhe im Innenraum des Kraftfahrzeugs 10 daher rührt, dass andere, fremde Passagiere langsam anfangen, ihre Sachen zusammenzupacken.

Insgesamt zeigen die Beispiele, wie durch die Erfindung ein am Kopf tragbare Anzeigegerät 14, vorzugsweise eine VR-Brille, bereitgestellt werden kann.

In einem weiteren Beispiel kann zum Beispiel bei Nutzung einer VR-Brille im Kraftfahrzeug 10 neben dem Hauptcontent in die beispielhafte VR-Umgebung ein (zum Beispiel in der Regel kleines) Kamerabild eingeblendet werden (S4), das die Situation im Fahrzeuginnenraum und gegebenenfalls auch außerhalb des Kraftfahrzeugs 10 an den VR-Nutzer vermittelt kann, sodass dieser immer einen Überblick über die aktuelle Situation in und um das Kraftfahrzeug 10 hat.

## Patentansprüche

1. Verfahren zum Betreiben eines am Kopf tragbaren Anzeigegeräts (14) während sich das am Kopf tragbare Anzeigegerät (14) in einem Innenraum eines Kraftfahrzeugs (10) befindet, wobei das Anzeigegerät (14) dazu eingerichtet ist, einen ein Unterhaltungsangebot beschreibenden vorgegebenen Ausgabeinhalt auszugeben, wobei eine Steuereinrichtung (12):
- ein Sensorsignal aus einer Sensoreinrichtung (18) empfängt, wobei das empfangene Sensorsignal mindestens ein Bild der aktuellen Innenraumsituation des Kraftfahrzeugs (10) beschreibt (S1),
- ein Einblendsignal erzeugt (S2), das ein Einblenden des mindestens einen Bilds der aktuellen Innenraumsituation (S4) während des Ausgebens des vorgegebenen Ausgabeinhalts beschreibt, und
- das erzeugte Einblendsignal an ein Anzeigeelement des Anzeigegeräts (14) überträgt (S3) und dadurch das Anzeigegerät (14) dazu veranlasst, das mindestens eine Bild der aktuellen Innenraumsituation während des Ausgebens des vorgegebenen Ausgabeinhalts einzublenden (S4),
wobei die Steuereinrichtung (12) das Einblendsignal nur dann erzeugt (S2) oder nur dann überträgt (S3), falls die Steuereinrichtung (12):
a) ein Sprechen eines Insassen feststellt (S5); und/oder
b) ein Annähern des Kraftfahrzeugs (10) an ein Fahrtziel feststellt (S6).

2. Verfahren nach Anspruch 1, wobei das erzeugte Einblendsignal das Einblenden des mindestens einen Bilds der aktuellen Innenraumsituation (S4) in nur einem Teilbereich eines Gesichtsfelds eines Benutzers des Anzeigegeräts (14) beschreibt, vorzugsweise in einem primären oder zentralen Gesichtsfeld.

3. Verfahren nach einem der vorhergehenden Ansprüche, wobei das empfangene Sensorsignal mindestens ein Kamerabild einer Innenraumkamera der Sensoreinrichtung (18) beschreibt.

4. Verfahren nach einem der vorhergehenden Ansprüche, wobei die Steuereinrichtung (12) das Sensorsignal aus einer Sensoreinrichtung (18) des Kraftfahrzeugs (10) empfängt (S1).

5. Verfahren nach einem der vorhergehenden Ansprüche, wobei der vorgegebene Ausgabeinhalt eine virtuelle Realität beschreibt, insbesondere eine 360 Grad virtuelle Realität.

6. Verfahren nach einem der vorhergehenden Ansprüche, wobei die Steuereinrichtung (12) das Einblendsignal nur dann erzeugt (S2) oder nur dann überträgt (S3), falls die Steuereinrichtung (12) ein Sprechen eines anderen Insassen als der Benutzer des Anzeigegeräts (14) feststellt (S5); vorzugsweise zusätzlich in Abhängigkeit von einer Lautstärke des festgestellten Sprechens.

7. Steuereinrichtung (12), die dazu eingerichtet ist, ein Verfahren nach einem der vorhergehenden Ansprüche durchzuführen.

8. Kraftfahrzeug (10), aufweisend eine Steuereinrichtung (12) nach Anspruch 7.

9. Am Kopf tragbares Anzeigegerät (14), aufweisend eine Steuereinrichtung (12) nach Anspruch 7.

## Claims

1. A method for operating a display device (14) wearable on the head while the display device (14) wearable on the head is located in an interior of a motor vehicle (10), wherein the display device (14) is configured to output a preset output content describing an entertainment offer, wherein a control device (12):
- receives a sensor signal from a sensor device (18), wherein the received sensor signal describes at least one image of the current interior situation of the motor vehicle (10) (S1),
- generates an overlay signal (S2), which describes overlay of the at least one image of the current interior situation (S4) during the output of the preset output content, and
- transfers the generated overlay signal to a display element of the display device (14) (S3) and thereby causes the display device (14) to overlay the at least one image of the current interior situation during the output of the preset output content (S4),
wherein the control device (12) generates (S2) or transfers (S3) the overlay signal only if the control device (12):
a) determines speaking of an occupant (S5); and/or
b) determines approach of the motor vehicle (10) to a drive destination (S6).

2. The method according to claim 1, wherein the generated overlay signal describes the overlay of the at least one image of the current interior situation (S4) only in a partial area of a field of view of a user of the display device (14), preferably in a primary or central field of view.

3. The method according to any one of the preceding claims, wherein the received sensor signal describes at least one camera image of an interior camera of the sensor device (18).

4. The method according to any one of the preceding claims, wherein the control device (12) receives the sensor signal from a sensor device (18) of the motor vehicle (10) (S1).

5. The method according to any one of the preceding claims, wherein the preset output content describes a virtual reality, in particular a 360 degree virtual reality.

6. The method according to any one of the preceding claims, wherein the control device (12) generates (S2) or transfers (S3) the overlay signal only if the control device (12) determines speaking of an occupant other than the user of the display device (14) (S5); preferably additionally depending on a volume of the determined speaking.

7. A control device (12), which is configured to perform a method according to any one of the preceding claims.

8. A motor vehicle (10) comprising the control device (12) according to claim 7.

9. A display device (14) wearable on the head, comprising a control device (12) according to claim 7.

## Revendications

1. Procédé pour faire fonctionner un appareil d'affichage (14) pouvant être porté sur la tête pendant que l'appareil d'affichage (14) pouvant être porté sur la tête se trouve dans un habitacle d'un véhicule à moteur (10), l'appareil d'affichage (14) étant conçu pour fournir un contenu de sortie prédéfini décrivant une offre de divertissement, dans lequel un dispositif de commande (12) :
- reçoit (S1) un signal de capteur provenant d'un dispositif de capteur (18), le signal de capteur reçu décrivant au moins une image de la situation actuelle dans l'habitacle du véhicule à moteur (10),
- génère (S2) un signal de superposition décrivant une superposition de la au moins une image de la situation actuelle (S4) dans l'habitacle pendant la fourniture du contenu de sortie prédéfini, et
- transmet (S3) le signal de superposition généré à un élément d'affichage de l'appareil d'affichage (14), en amenant ainsi l'appareil d'affichage (14) à superposer (S4) la au moins une image de la situation actuelle dans l'habitacle pendant la fourniture du contenu de sortie prédéfini,
dans lequel le dispositif de commande (12) ne génère (S2) ou ne transmet (S3) le signal de superposition que si le dispositif de commande (12) :
a) détermine (S5) qu'un passager est en train de parler ; et/ou
b) détermine (S6) que le véhicule à moteur (10) s'approche d'une destination.

2. Procédé selon la revendication 1, dans lequel le signal de superposition généré décrit la superposition de la au moins une image de la situation actuelle dans l'habitacle (S4) uniquement dans une zone partielle d'un champ de vision d'un utilisateur de l'appareil d'affichage (14), de préférence dans un champ de vision primaire ou central.

3. Procédé selon l'une des revendications précédentes, dans lequel le signal de capteur reçu décrit au moins une image de caméra d'une caméra d'habitacle du dispositif de capteur (18).

4. Procédé selon l'une des revendications précédentes, dans lequel le dispositif de commande (12) reçoit (S1) le signal de capteur provenant d'un dispositif de capteur (12) du véhicule à moteur (10).

5. Procédé selon l'une des revendications précédentes, dans lequel le contenu de sortie prédéfini décrit une réalité virtuelle, en particulier une réalité virtuelle à 360 degrés.

6. Procédé selon l'une des revendications précédentes, dans lequel le dispositif de commande (12) ne génère (S2) ou ne transmet (S3) le signal de superposition que si le dispositif de commande (12) détermine (S5) qu'une voix d'un autre passager est celle de l'utilisateur de l'appareil d'affichage (14) ; de préférence en plus en fonction d'un volume de la voix déterminée.

7. Dispositif de commande (12) configuré pour mettre en oeuvre un procédé selon l'une des revendications précédentes.

8. Véhicule à moteur (10) comportant un dispositif de commande (12) selon la revendication 7.

9. Appareil d'affichage pouvant être porté sur la tête (14), comportant un dispositif de commande (12) selon la revendication 7.
